# EUROPÄISCHE PATENTSCHRIFT

(11) **EP 4 368 476 B1**
(45) Veröffentlichungstag und Bekanntmachung des Hinweises auf die Patenterteilung: **27.11.2024**
(21) Anmeldenummer: 23205840.4
(22) Anmeldetag: 25.10.2023
(51) Int. Cl.: B62D 1/183, B62D 1/16, B62D 1/20, E02F 9/16

(54) **MOBILE ARBEITSMASCHINE**
MOBILE WORKING MACHINE
MACHINE DE TRAVAIL MOBILE

(30) Priorität: 07.11.2022 DE 202022106231 U
(43) Veröffentlichungstag der Anmeldung: 15.05.2024
(73) Patentinhaber: Liebherr-Hydraulikbagger GmbH, 88457 Kirchdorf/Iller (DE)
(72) Erfinder: VELOSO, Daniel, 87740 Memmingen (DE); HESS, Christoph, 88138 Hergensweiler (DE)
(74) Vertreter: Laufhütte, Dieter

(56) Entgegenhaltungen:
- EP-A1- 0 195 886
- EP-B1- 0 841 236
- JP-A- 2016 130 036
- US-A1- 2009 321 171
- US-A1- 2016 304 113
- US-A1- 2019 152 505
- US-A1- 2019 367 072
- US-A1- 2021 316 778

## Beschreibung

Die vorliegende Erfindung betrifft eine mobile Arbeitsmaschine, insbesondere einen Bagger oder dergleichen.

Mobile Arbeitsmaschinen haben oftmals ein größer dimensioniertes Fahrwerk mit Reifen großen Durchmessers (oder gar einen Kettenantrieb), damit diese auch in unwegsamem und nicht befestigtem Gelände sicheren Halt finden und sich auch unter diesen erschwerten Bedingungen verlässlich fortbewegen können.

Dies führt dazu, dass eine Fahrerkabine in der Regel oberhalb des Fahrwerks angeordnet ist, was zu einer beträchtlichen Höhe der Anordnung der Kabine über einem Bodenniveau führt. Am Beispiel eines Baggers ist dies recht eindrücklich ersichtlich, da zunächst der Unterwagen mit dem Fahrwerk (Kette oder Rad) vorgesehen ist und sich die Fahrerkabine auf dem rotierbar gegenüber dem Unterwagen angeordneten Oberwagen befindet. Je nach Dimensionierung des Baggers kann es dann dazu kommen, dass die Fahrerkabine signifikant (bis hin zu einigen Meter) über dem Bodenniveau angeordnet ist.

Aus diesem Umstand resultiert, dass ein Bediener einer mobilen Arbeitsmaschine bei seiner Arbeit typischerweise einen schräg nach unten verlaufenden Sichtwinkel aus seiner Fahrerkabine hinaus vornimmt, um den unmittelbar vor der Fahrerkabine angeordneten Bodenbereich visuell zu erfassen. Um eine gute Sichtbarkeit des Arbeitsbereichs zu ermöglichen, weisen Fahrerkabinen von mobilen Arbeitsmaschinen großflächige Scheibenbereiche auf, die dabei helfen, eine möglichst gute Sicht aus der Fahrerkabine hinaus zu erhalten.

Aufgrund gesetzlicher Vorgaben in einer Vielzahl von Ländern ist es jedoch erforderlich, dass in der Fahrerkabine in der Mitte vor dem Fahrersitz ein Lenkrad oder dergleichen angeordnet ist, über welches der Bediener der mobilen Arbeitsmaschine Fahrtrichtungsänderungen übermitteln kann. Für die Fortbewegung auf der Straße im öffentlichen Bereich ist das Vorhandensein des Lenkrads üblich. Im tatsächlichen Arbeitseinsatz der mobilen Arbeitsmaschine auf einer Baustelle wird die Steuerung der mobilen Arbeitsmaschine in der Regel aber oftmals nicht mithilfe des Lenkrads, sondern mit einer Sekundärlenkung, nämlich einem Joystick durchgeführt. Dies bietet den Vorteil, dass im Zusammenspiel mit der Lenkung über den Joystick ein kombiniertes Steuern des Fahrwerks, einer Drehbewegung des Oberwagens und des an dem Oberwagen vorgesehenen Werkzeugs, beispielsweise einem Baggerarm oder dergleichen, möglich ist. Demnach ist es also auch möglich, die über die Primärlenkung eingebbaren Lenkbefehle mithilfe der Sekundärlenkung zu übermitteln, wobei dies aber in der Regel auf eine weniger intuitive Art und Weise erfolgt als mit der Primärlenkung.

Während des Betriebs einer mobilen Arbeitsmaschine kommt es immer wieder zu Sichteinschränkungen im Nahbereich der Fahrerkabine, da die Primärlenkung direkt im favorisierten Sichtfeld des Bedieners angeordnet ist.

Aus der US2021316778A1 ist eine Arbeitsmaschine bekannt, bei welcher eine Lenkradanordnung zur Verbesserung der Sicht zur Seite neben den Fahrersitz bewegt werden kann. Des Weiteren offenbart die US2019152505A1 eine unter den Fahrersitz verstaubare Lenkradanordnung eines autonom betreibbaren Fahrzeugs.

Es ist das Ziel der vorliegenden Erfindung, eine mobile Arbeitsmaschine bereitzustellen, die eine verbesserte Sicht für den Bediener einer mobilen Arbeitsmaschine aus der Fahrerkabine hinaus ermöglicht.

Dies gelingt mit einer mobilen Arbeitsmaschine, die sämtliche Merkmale des Anspruchs 1 aufweist. Vorteilhafte Ausgestaltungen der vorliegenden Erfindung finden sich dabei in den Unteransprüchen.

Nach der Erfindung ist dabei vorgesehen, dass die mobile Arbeitsmaschine, insbesondere ein Bagger, eine Fahrerkabine zum Aufnehmen eines Bedieners der mobilen Arbeitsmaschine, einen in der Fahrerkabine angeordneten Bedienplatz für den Bediener, insbesondere ein Sitz, eine in Fahrtrichtung der mobilen Arbeitsmaschine vor dem Bedienplatz angeordnete Primärlenkung, insbesondere ein Lenkrad, und eine in Fahrtrichtung der mobilen Arbeitsmaschine seitlich zum Bedienplatz versetzt angeordnete Sekundärlenkung, insbesondere ein Joystick, umfasst. Die mobile Arbeitsmaschine ist dadurch gekennzeichnet, dass die Primärlenkung einen Lenksäulenabschnitt aufweist, der mit einer Lenksäulenaufnahme zusammenwirkt, um eine Lenkaktuation an eine die gewünschte Lenkbewegung umsetzende Steuereinheit weiterzugeben, wobei der Lenksäulenabschnitt und die Lenksäulenaufnahme über eine Steckverbindung miteinander drehfest verbindbar sind, sodass der Bediener dazu in der Lage ist, in Abhängigkeit einer empfundenen Sichteinschränkung, die Primärlenkung zu demontieren bzw. abzunehmen.

Nach der Erfindung ist es also möglich, die Primärlenkung, beispielsweise ein Lenkrad mit fest damit verbundenem Lenksäulenabschnitt, mithilfe einer Steckverbindung von einer Lenksäulenaufnahme abzustecken und diese während eines Arbeitsvorgangs, der eine besonders gute Sicht im Nahbereich der Frontkabine erfordert, an einem Platz aufzubewahren, der die Sichtlinie aus der Fahrerkabine nicht behindert.

Die vormals über die Primärlenkung eingebbaren Steuerbefehle werden dann mithilfe der Sekundärlenkung übermittelt, falls dies erforderlich sein sollte.

Nach einer vorteilhaften Modifikation der vorliegenden Erfindung kann vorgesehen sein, dass die Steckverbindung mithilfe einer Schnellkupplung umgesetzt ist, die vorzugsweise den an die Lenksäulenaufnahme gekoppelten Lenksäulenabschnitt durch Betätigen eines Verriegelungsmechanismus, beispielsweise ein Fußpedal, freigibt, bevorzugterweise derart, dass der Lenksäulenabschnitt dann durch ein Herabheben von der Lenksäulenaufnahme getrennt werden kann.

Um eine möglichst einfache Möglichkeit der Demontage der Primärlenkung vorzusehen, ist die Primärlenkung mit ihrem Lenksäulenabschnitt über eine Schnellkupplung an die Lenksäulenaufnahme gekoppelt. Eine Schnellkupplung ist dabei eine Art von Kupplung, die werkzeuglos durch den Bediener getrennt und geschlossen werden kann. Vorliegend kann beispielsweise die Schnellkupplung so ausgestaltet sein, dass durch ein Betätigen eines Fußpedals, welches an der Lenksäulenaufnahme oder dem Lenksäulenabschnitt befestigt sein kann, die Kupplung von Lenksäulenaufnahme und Lenksäulenabschnitt außer Eingriff bringbar ist, sodass der Bediener durch eine Hebebewegung die Primärlenkung abnehmen kann. Der Vorteil der Freigabe mittels Fußpedals besteht darin, dass für das Abheben des Lenkrads dann zwei Hände des Bedieners zur Verfügung stehen, sodass dieses sicher von der Lenksäulenaufnahme abgezogen und im Anschluss daran gleich an einen vorübergehenden Aufbewahrungsort verbracht werden kann.

Nach einer Fortbildung der vorliegenden Erfindung kann vorgesehen sein, dass die Fahrerkabine einen Bodenbereich aufweist, von dem sich die Lenksäulenaufnahme nach oben hin erstreckt.

Die Fahrerkabine besitzt in der Regel eine Bodenplatte oder einen Bodenbereich, die als Basis für die in der Fahrerkabine enthaltenen Komponenten dient. So ist beispielsweise auf der Bodenplatte bzw. dem Bodenbereich ein Fahrersitz oder die Lenksäulenaufnahme angeordnet. Bei mobilen Arbeitsmaschine erstreckt sich typischerweise aus dem Bodenbereich der Fahrerkabine die Lenksäule, die an ihrem vom Boden abgewandten Ende mit einem Lenkrad verbunden ist, damit der Bediener der mobilen Arbeitsmaschine Lenkaktionen über das Drehen des Lenkrads auf intuitive Art und Weise eingeben kann. Im Wesentlichen kann also vorgesehen sein, dass sich ausgehend von dem Lenkrad die stabartige Lenksäule bzw. der Lenksäulenabschnitt und die Lenksäulenaufnahme in Richtung Boden erstrecken und den Bodenbereich durchstoßen, damit eine Erfassung des Lenksignals in einem unterhalb des Bodenbereichs bzw. der Bodenplatte der Fahrerkabine angeordneten Bereich vorgenommen werden kann.

Vorzugsweise kann dabei vorgesehen sein, dass die Lenksäulenaufnahme weniger als 30 cm, vorzugsweise weniger als 20 cm und bevorzugter Weise weniger als 10 cm von dem Bodenbereich der Fahrerkabine absteht. Vorteilhaft ist es, wenn die Aufnahme so wenig wie möglich vom Bodenbereich absteht.

Es ist von Vorteil, wenn die Lenksäulenaufnahme, mit der der Lenksäulenabschnitt der Primärlenkung wahlweise zusammenwirken kann in einem demontierten Zustand der Primärlenkung nicht zu weit von dem Bodenbereich in das Innere der Fahrerkabine hineinragt, da ansonsten ebenfalls eine Einschränkung des Sichtfelds für den Bediener vorliegen würde und eine Verletzungsgefahr für den Bediener im demontierten Zustand der Lenksäule inklusive Lenkrad besteht. Aus diesem Grund ist es wünschenswert, die Höhe der Lenksäulenaufnahme, die in das Innere der Fahrerkabine hineinragt auf weniger als 30 cm zu beschränken.

Weiter kann vorgesehen sein, dass die Lenksäulenaufnahme, also der nicht demontierbare Abschnitt, zwischen dem Bodenbereich der Fahrerkabine und dem Bereich zum Anbinden des Lenksäulenabschnitts eine Verschwenkeinrichtung aufweist, mit dem der Bediener in einem angebundenen Zustand der Primärlenkung diese in eine gewünschte Richtung neigbar verstellen kann. Es ist also nicht zwingend erforderlich, dass in einem angebundenen Zustand der Lenksäulenabschnitt und die Lenksäulenaufnahme eine durchgehend geradlinige Form aufweisen, da aufgrund der Verschwenkeinrichtung auch eine geknickte Form möglich ist. Dies ist von Vorteil, damit der Bediener die Primärlenkung nach seinen Bedürfnissen neigen kann, um eine für ihn möglichst angenehme Position zu erreichen.

Nach einer optionalen Fortbildung der vorliegenden Erfindung kann vorgesehen sein, dass die Fahrerkabine eine Frontscheibe aufweist, die vorzugsweise bis zu einem Bodenbereich der Fahrerkabine verläuft.

Die bis in den Bodenbereich reichende Frontscheibe ermöglicht eine ausreichende Sicht des Bedieners von seinem Fahrersitz aus in einen Nahbereich der mobilen Arbeitsmaschine. Die Frontscheibe kann sich dabei bis hin zum Bodenbereich bzw. der Bodenplatte der Fahrerkabine erstrecken. Weiter ist möglich, dass auch Teile der Bodenplatte eine Scheibe aufweisen oder gar Bestandteil der Frontscheibe sind. Dies ist beispielsweise dann möglich, wenn in einem Übergangsbereich von Bodenplatte und Frontscheibe die Frontscheibe geknickt ausgestaltet ist und so einen Teil der Bodenplatte darstellt.

Nach einer vorteilhaften Fortbildung der vorliegenden Erfindung kann vorgesehen sein, dass die drehfeste Verbindung von Lenksäulenabschnitt und Lenksäulenaufnahme über eine Kerbverzahnung umgesetzt ist.

Die Kerbverzahnung ermöglicht auf eine einfache Art und Weise eine drehfeste Verbindung zwischen zwei voneinander trennbaren Elementen, in dem beispielsweise der Lenksäulenabschnitt in seinem Verbindungsbereich die Form eines Hohlrohrs aufweist, das an seinem Innenumfang mit einer entsprechenden Zahnstruktur versehen ist. Der dazu entsprechende Verbindungsbereich der Lenksäulenaufnahme ist komplementär ausgebildet und kann eine Stangen- oder Rohrform aufweisen, die an ihrem Außenumfang eine dazu passende Zahnstruktur besitzt. Schiebt man dann das Hohlrohr des Lenksäulenabschnitts auf die beispielsweise stangenförmig ausgebildete Lenksäulenaufnahme auf, greifen die jeweiligen Zahnstrukturen ineinander ein, sodass sich eine drehfeste Verbindung ergibt.

Weiter kann nach der vorliegenden Erfindung vorgesehen sein, dass eine Detektionsvorrichtung vorgesehen ist, die erfasst, ob der Lenksäulenabschnitt mit der Lenksäulenaufnahme zusammenwirkt, bzw. auf diesen aufgesteckt sowie für die Straßenfahrt ordnungsgemäß verriegelt ist und ein entsprechendes Signal an eine Maschinensteuerung der mobilen Arbeitsmaschine überträgt.

Die Detektionseinrichtung ist dazu ausgebildet, zu erkennen, ob der Lenksäulenabschnitt und die Lenksäulenaufnahme in einer Wirkverbindung zueinanderstehen, also ob die Primärlenkung betätigbar ist. Ist dies der Fall, sendet die Detektionsvorrichtung ein entsprechendes Signal an eine Maschinensteuerung, damit diese über den Zustand der Primärlenkung Bescheid weiß. Die Detektionseinrichtung kann zum Erfassen eines korrekt angesteckten Lenksäulenabschnitts einen Kapazitätssensor, einen Induktionssensor, einen Tastsensor oder dergleichen umfassen.

Vorzugsweise kann vorgesehen sein, dass die Maschinensteuerung dazu ausgelegt ist, dann, wenn das durch die Detektionseinheit erfasste Signal angibt, dass der Lenksäulenabschnitt und die Lenksäulenaufnahme voneinander getrennt sind, eine maximale Fahrgeschwindigkeit der mobilen Arbeitsmaschine zu begrenzen bzw. zu verringern.

Da die Primärlenkung die bevorzugte Möglichkeit zum Steuern eines Lenkeinschlags des Fahrwerks der Arbeitsmaschine darstellt und die Möglichkeit der Lenkung des Fahrwerks der mobilen Arbeitsmaschine mithilfe der Sekundärlenkung für einen Bediener weit weniger üblich und intuitiv ist, ist es von Vorteil, wenn die maximale Verfahrgeschwindigkeit der mobilen Arbeitsmaschine verringert wird, wenn diese mithilfe der Sekundärlenkung gelenkt wird. Dies trägt zur Sicherheit bei und verhindert insbesondere das Betreiben der mobilen Arbeitsmaschine, wenn hohe Fahrgeschwindigkeiten gewünscht sind, bei denen die Nutzung der Primärlenkung aus Sicherheitsgründen von Vorteil ist.

Nach einer Fortbildung der vorliegenden Erfindung kann ferner vorgesehen sein, dass die Maschinensteuerung dazu ausgelegt ist, die maximale Geschwindigkeit der mobilen Arbeitsmaschine auf einen Wert zu reduzieren, der ein sicheres Führen des Fahrzeuges ermöglicht, so z. B auf einen Wert von nicht mehr als 20 km/h, vorzugsweise nicht mehr als 15 km/h und bevorzugter Weise nicht mehr als 12 km/h.

Ferner kann nach einer optionalen Modifikation der vorliegenden Erfindung vorgesehen sein, dass die Maschinensteuerung dazu ausgelegt ist, dann, wenn das durch die Detektionseinheit erfasste Signal angibt, dass der Lenksäulenabschnitt und die Lenksäulenaufnahme in Wirkverbindung zueinanderstehen, eine Begrenzung der maximalen Fahrgeschwindigkeit der mobilen Arbeitsmaschine nicht vorzusehen oder aufzuheben.

Eine etwaige Begrenzung der maximalen Fahrgeschwindigkeit wird also aufgehoben, wenn die Detektionseinrichtung erkennt, dass die Primärlenkung funktionsfähig ist.

Nach einer optionalen Modifikation der vorliegenden Erfindung kann vorgesehen sein, dass die Lenksäulenaufnahme im Kontaktbereich mit dem Lenksäulenabschnitt die Ausgestaltung einer Welle mit radial umlaufender Kerbverzahnung aufweist. Eine Kerbverzahnung stellt dabei eine besonders vorteilhafte Möglichkeit zum Umsetzen einer drehfesten Verbindung zweier aneinander koppelbarer Wellenabschnitte (Lenksäulenabschnitt und Lenksäulenaufnahme) dar.

So kann nach der Erfindung beispielsweise vorgesehen sein, dass der Lenksäulenabschnitt im Kontaktbereich mit der Lenksäulenaufnahme die Ausgestaltung einer Hohlwelle aufweist, die an ihrem Innenumfang mit einer Kerbverzahnung versehen ist, wobei diese Kerbverzahnung vorzugsweise auf eine Kerbverzahnung des Lenksäulenabschnitts abgestimmt ist. Natürlich muss die Aufnahme nicht zwangsläufig als Hohlwelle ausgeführt sein. Prinzipiell kann die Hohlwelle auch im Lenkrad und die Zapfwelle an der Aufnahme vorgesehen sein. Dies hätte Vorteile hinsichtlich der Verschmutzungsproblematik.

Ferner kann dabei vorgesehen sein, dass eine Verriegelungseinheit vorgesehen ist, die nach einem Aufstecken des Lenksäulenabschnitts auf die Lenksäulenaufnahme eine Relativbewegung.-beispielsweise in axialer Richtung des Lenksäulenabschnitts gegenüber der Lenksäulenaufnahme unterbindet. Diese Verriegelungseinheit verhindert das unbeabsichtigte Abziehen der Primärlenkung von der Lenksäulenaufnahme.

Vorteilhafterweise kann nach einer weiteren Ausgestaltung der vorliegenden Erfindung vorgesehen sein, dass die Verriegelungseinheit seitlich zur Längsausdehnung der Lenksäulenaufnahme und/oder des Lenksäulenabschnitts abstehende Stifte zum Einhaken einer Rastnase aufweist.

Die Stifte können dabei als Befestigungspunkt für den aufzusteckenden anderen Teil dienen. Vorstellbar ist auch, dass der aufzusteckende Teil, der mit den Stiften zusammenwirken soll, mindestens eine labyrinthartige Öffnung aufweist, in welche die Stifte eingefädelt werden, sodass ein Abziehen nicht mehr ohne weiteres möglich ist. Denkbar ist aber auch die Nutzung von Rastnasen, die beispielsweise mithilfe einer Feder vorgespannt sind und bei einem Aufstecken entgegen ihrer Vorspannkraft ausgelenkt werden, sodass nach Beendigung des Aufsteckvorgangs eine jeweilige Rastnase einen zugehörigen Stift hintergreift.

Demnach kann also auch vorgesehen sein, dass die Verriegelungseinheit an der Lenksäulenaufnahme und/oder an dem Lenksäulenabschnitt eine federvorgespannte Rastnase aufweist, um bei einem Aufstecken des Lenksäulenabschnitts auf die Lenksäulenaufnahme eine Verrastung von Lenksäulenabschnitt mit der Lenksäulenaufnahme zu bewirken.

Weitere Einzelheiten, Merkmale und Fortschritte der Erfindung werden anhand der nachfolgenden Figurenbeschreibung ersichtlich. Dabei zeigen:
- Fig. 1:: eine perspektivische Darstellung des Sichtbereichs des Bedieners einer mobilen Arbeitsmaschine aus der Fahrerkabine hinaus,
- Fig. 2:: eine perspektivische Darstellung des Sichtbereichs des Bedieners einer mobilen Arbeitsmaschine aus der Fahrerkabine hinaus, bei der das Lenkrad mit einem zugehörigen Lenksäulenabschnitt abgesteckt ist,
- Fig. 3:: eine Detailansicht im Verbindungsbereich von Lenksäulenabschnitt und Lenksäulenaufnahme, und
- Fig. 4:: eine Detailansicht im Verbindungsbereich von Lenksäulenabschnitt und Lenksäulenaufnahme, bei dem der Lenksäulenabschnitt von der Lenksäulenaufnahme abgesteckt ist.

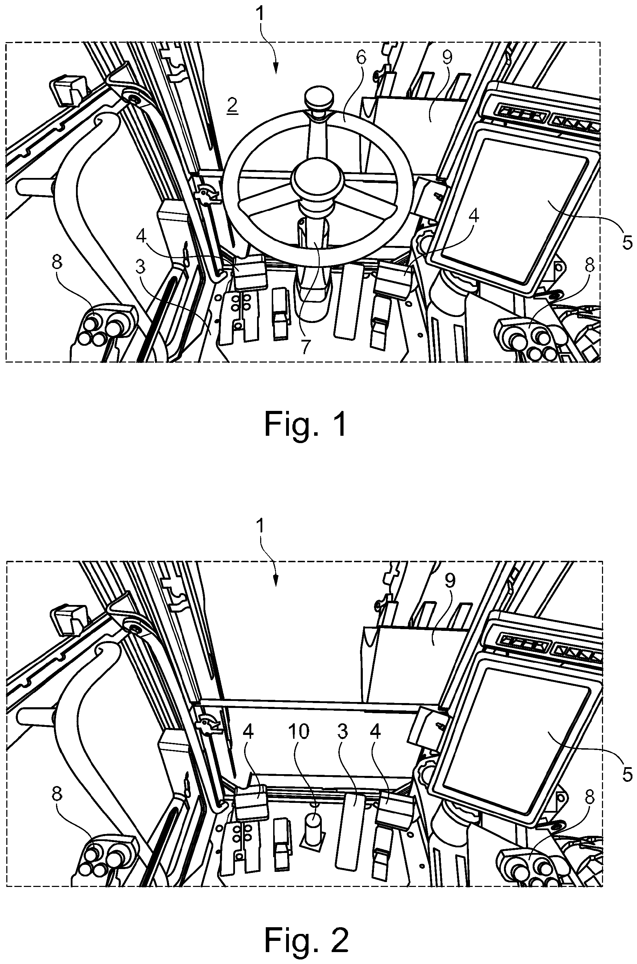

Fig. 1 zeigt eine perspektivische Darstellung des Sichtbereichs eines Bedieners aus der Fahrerkabine 1 einer mobilen Arbeitsmaschine. Dabei wird angenommen, dass der Bediener der mobilen Arbeitsmaschine in dem Sitz der Fahrerkabine sitzt und normal nach vorne unten gerichtet aus der Fahrerkabine blickt. Man erkennt, dass der Blick auf die Umgebung der Fahrerkabine 1 im vorderen Bereich der Fahrerkabine 1 durch die Frontscheibe 2 freigegeben wird. Links und rechts vom Bediener aus gesehen befinden sich ebenfalls große Scheibenflächen, damit die Rundumsicht des Bedieners so wenig wie möglich eingeschränkt wird. Darüber hinaus erkennt man, dass die Fahrerkabine einen Bodenbereich 3 aufweist, an dem Fußpedale 4 zum Steuern der mobilen Arbeitsmaschine vorgesehen sind. In einem Straßenfahrmodus kann dabei beispielsweise das rechte Fußpedals 4 die Aufgabe eines Gaspedals übernehmen, wohingegen das linke Fußpedals 4 die Aufgabe einer Bremse übernimmt. Weiter erkennt man im rechten Bereich des in Fig. 1 dargestellten Blickfelds eine Anzeigeeinheit 5 auf der Informationen über den Zustand der mobilen Arbeitsmaschine wiedergegeben werden können.

Mittig, unmittelbar vor dem Fahrersitz angeordnet ist darüber hinaus die Primärlenkung 6 vorgesehen, die zum Eingeben eines Lenkbefehls an die mobile Arbeitsmaschine dient. Die Primärlenkung 6 umfasst vorliegend ein Lenkrad, welches eine Lenkbewegung über eine mit dem Lenkrad verbundene Lenksäule 7 überträgt.

Darüber hinaus erkennt man im unteren Randbereich der Fig. 1 sowohl auf der linken wie auch auf der rechten Seite jeweils eine Sekundärlenkung 8, die vorliegend als Joystick ausgeführt ist.

Man erkennt, wie sehr die Primärlenkung 6 in Form des Lenkrads das Sichtfeld des Bedieners der mobilen Arbeitsmaschine einschränkt, da dieses unmittelbar vor der Fahrerkabine einen ungestörten Blick zum Bodenbereich behindert. Die Primärlenkung schränkt das Sichtfeld im Nahbereich der mobilen Arbeitsmaschine ein. Darüber hinaus ist auch der zu mobilen Arbeitsmaschine gehörende Baggerlöffel 9 zu sehen, der als ein beispielhaft dargestelltes Arbeitswerkzeug der mobilen Arbeitsmaschine illustriert worden ist.

Fig. 2 zeigt nun dasselbe Sichtfeld ausgehend von dem in der Fahrerkabine 1 befindlichen Bediener, wobei aber nach der erfindungsgemäßen Idee die Primärlenkung 6 abgesteckt worden ist, wodurch das Sichtfeld des Bedieners in der Fahrerkabine 1 signifikant verbessert wird.

Dies erkennt man unmittelbar daran, dass der im Nahbereich vor der Fahrerkabine angeordnete Bodenbereich deutlich besser zu sehen ist. Bspw. ist nun eine Sichtbehinderung am Boden unmittelbar vor der mobilen Arbeitsmaschine durch die Primärlenkung 6 nicht mehr möglich.

Man kann eindrucksvoll erkennen, dass die Grundidee der vorliegenden Erfindung das Sichtfeld des Bedieners in der Fahrerkabine 1 deutlich verbessert und demnach einen großen Mehrwert bringt. Dem Fachmann ist klar, dass ein verbessertes Sichtfeld auch in Bezug auf die von einer mobilen Arbeitsmaschine ausgehende Gefahr von Vorteil ist, da mit der besseren Sicht des Bedieners die Unfallgefahr reduziert wird.

Vom Bodenbereich 3 der Fahrerkabine 1 steht nun lediglich noch die Lenksäulenaufnahme 10 ab, die aber in der Regel deutlich geringer als 30 cm lang ist und nicht das Sichtfeld behindert. In dem Fig. 2 dargestellten Zustand der mobilen Arbeitsmaschine wird eine Lenkaktuation, welche vormals durch die Primärlenkung 6 übernommen worden ist, durch die Sekundärlenkung 8 ausgeübt. D. h., dass der Bediener nun anstelle des Lenkrads 6 eine Lenkbewegung mit dem Joystick 8 an die Arbeitsmaschine übermitteln kann.

Da dies aber weniger intuitiv als das Betätigen eines Lenkrads 6 ist, kann aus Sicherheitsgründen vorgesehen sein, dass die maximale Fahrgeschwindigkeit der mobilen Arbeitsmaschine in einem Zustand, in welchem die Primärlenkung 6 demontiert ist, herabgesetzt bzw. begrenzt wird. Dazu ist eine Detektionsvorrichtung vorgesehen, welche erkennt, ob die Primärlenkung 6 montiert oder demontiert ist. Befindet sich die Primärlenkung 6 in einem demontierten Zustand, so meldet dies die Detektionsvorrichtung an eine Maschinensteuerung, welche dann in Erwiderung hierauf die maximale Fahrgeschwindigkeit der mobilen Arbeitsmaschine begrenzt. Beispielsweise kann so vorgesehen sein, dass bei einer Konfiguration, in der die Primärlenkung 6 nicht aufgesteckt ist, die Fahrgeschwindigkeit der mobilen Arbeitsmaschine 20 km/h nicht übersteigen kann.

Ferner kann vorgesehen sein, dass bei der Detektion eines demontierten Lenkrads 6 die Motorsteuerung automatisch die Lenkfunktion auf die Sekundärlenkung überträgt, ohne dass dies manuell von dem Bediener in einem Auswahlmenü beispielsweise mithilfe der Anzeigevorrichtung 5 ausgewählt werden muss.

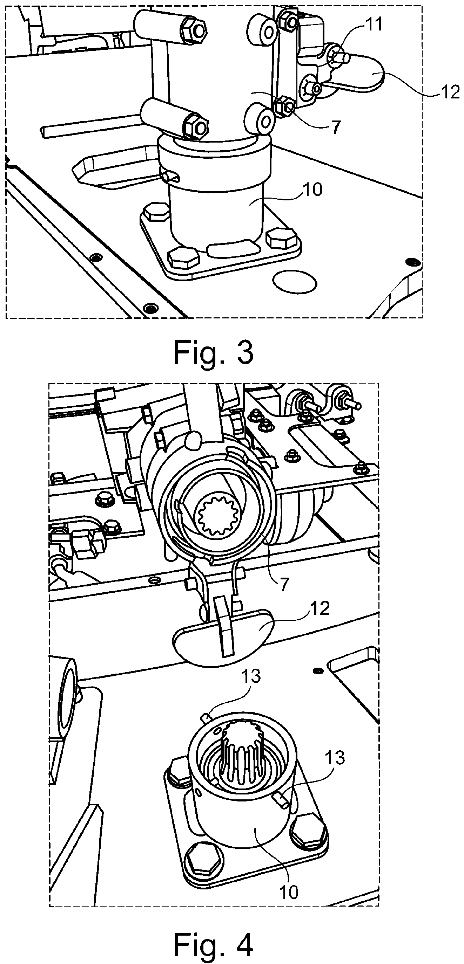

Fig. 3 zeigt eine mögliche Umsetzung der Lenksäulenaufnahme 10 sowie eines daran angebundenen Lenksäulenabschnitts 7. In der vorliegenden Figur erkennt man, dass die beiden Komponenten, also der Lenksäulenabschnitt 7 und die Lenksäulenaufnahme 10 miteinander in Eingriff stehen, sodass eine über das Lenkrad 6 übermittelte Lenkbewegung (bspw. Drehbewegung) über die Lenksäulenaufnahme 10 weitergegeben wird.

Darüber hinaus erkennt man einen Verriegelungsmechanismus 11, der mithilfe einer Entriegelungsvorrichtung, insbesondere einem Fußpedal 12, in einen entriegelten Zustand überführt werden kann.

Betätigt man dieses Fußpedals 12 des Verriegelungsmechanismus 11 so wird ein Eingriff, der zwischen dem Lenksäulenabschnitt 7 und der Lenksäulenaufnahme 10 besteht, freigegeben, sodass der Bediener die Primärlenkung 6 (mitsamt dem Lenksäulenabschnitt 7) von der Lenksäulenaufnahme 10 abheben kann.

Fig. 4 zeigt eine Darstellung, in der die Lenksäulenaufnahme 10 von dem Lenksäulenabschnitt 7 getrennt ist. Man erkennt, dass die Lenksäulenaufnahme 10 eine Welle besitzt, die an dem zum Inneren der Fahrerkabine 1 gewandten Ende eine radial umlaufende Verzahnung besitzt. Diese Kerbverzahnung dient in Zusammenwirkung mit dem Lenksäulenabschnitt 7, der im Übergangsbereich zu der Lenksäulenaufnahme 10 beispielsweise als Hohlrohr mit innenliegender Verzahnung ausgebildet sein kann, dazu, dass eine drehfeste Verbindung in einem aufgesteckten Zustand zwischen Lenksäulenaufnahme 10 und Lenksäulenabschnitt 7 hergestellt wird.

Um nun noch sicherzustellen, dass die Primärlenkung 6 nicht unbeabsichtigt von der Lenksäulenaufnahme 10 abgehoben wird, ist ein entsprechender Verriegelungsmechanismus vorgesehen, der in der in der Fig. 3 dargestellten Umsetzung mit den zwei an der Lenksäulenaufnahme 10 seitlich abstehenden Stiften 13 zusammenwirkt.

Der Verriegelungsmechanismus kann dabei an dem Lenksäulenabschnitt 7 eine labyrinthartige Ausnehmung in einem Hohlrohr sein, sodass nach einem Aufstecken und einem Einführen der Stifte in die Ausnehmung eine Verdrehung der beiden Komponenten dazu führt, dass ein unbeabsichtigtes Abheben der Primärlenkung 6 nicht möglich ist. Darüber hinaus ist auch ein Rastmechanismus vorstellbar, der bei einem Aufstecken des Lenksäulenabschnitts 7 mit den Stiften 13 an der Lenksäulenaufnahme 10 rastend eingreift.

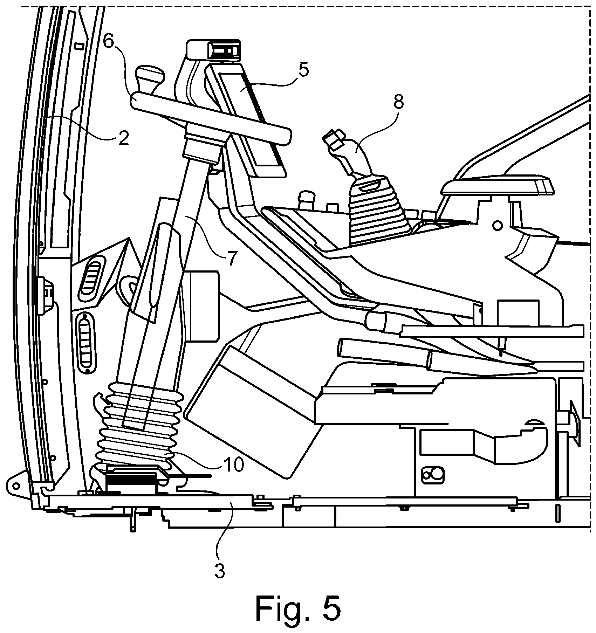

Fig. 5 zeigt dabei eine Schnittansicht durch eine Fahrerkabine 1 einer mobilen Arbeitsmaschine. Auf der linken Seite der Fahrerkabine erkennt man die Frontscheibe 2, die sich hin zu einem Bodenbereich 3 erstreckt. Vom Bodenbereich 3 erstreckt sich in das Innere der Fahrerkabine 1 zunächst die Lenksäulenaufnahme 10 (in Fig. 5 verdeckt durch den Gummibalg), auf der der Lenksäulenabschnitt 7 der Primärlenkung 6 aufgesteckt ist. Um den Komfort für den Bediener in der Kabine 1 zu erhöhen, kann ein Kippmechanismus vorgesehen sein, der eine Neigung der Lenksäule 7 ermöglicht.

Dieser Kippmechanismus ist bei abgesteckter Primärlenkung 6 nicht demontiert, sondern Teil der Lenksäulenaufnahme 10. D. h., der Verbindungsbereich zum Anbinden des Lenksäulenabschnitts 7 befindet sich oberhalb des Kippmechanismus der Lenksäulenaufnahme 10.

Dargestellt ist weiterhin, dass der Verbindungsbereich von Lenksäulenabschnitt 7 und Lenksäulenaufnahme 10 von einem Gummibalg umgeben ist, der als Verkleidung für den Verbindungsbereich dient. Diese Verkleidung kann aber ebenfalls nur auf den Lenksäulenabschnitt bzw. die Lenksäulenaufnahme 10 aufgesteckt sein, sodass bei einer Demontage der Primärlenkung 6 die Verkleidung in Form des Gummibalgs ebenfalls entfernt werden kann. Darüber hinaus versteht der Fachmann, dass die Verkleidung für den Verbindungsbereich von Lenksäulenabschnitt 7 und Lenksäulenaufnahme 10 nicht zwingend erforderlich ist, sodass dieser auch vollständig auf diese verzichten kann.

Darüber hinaus erkennt man seitlich im Bereich des Sitzes des Bedieners der Fahrerkabine 1 einen Joystick 8, der als Sekundärlenkung genutzt werden kann. Ist also die Primärlenkung 6 demontiert, kann die mobile Arbeitsmaschine weiterhin dieselben Lenkaktionen durchführen, wobei diese dann nicht über die Primärlenkung 6, sondern über die Sekundärlenkung 8 eingegeben werden.

Durch die vorstehend beschriebene Erfindung ist es nun möglich, dass der Bediener einer mobilen Arbeitsmaschine die Möglichkeit hat, bei Bedarf sein Sichtfeld in den vorderen unteren Bereich der mobilen Arbeitsmaschine deutlich zu verbessern. Dies wird dadurch erreicht, indem er die störende Lenksäule mitsamt dem daran befindlichen Lenkrad beispielsweise werkzeuglos demontieren kann, sodass das vormals sich unmittelbar im Sichtbereich befindende Lenkrad nun nicht mehr den Sichtbereich störend einschränkt. Die vormals über das Lenkrad eingegebenen Lenkbefehle können dann mithilfe einer Sekundärlenkung, beispielsweise einem Joystick, weiterhin eingegeben werden, sodass die volle Funktionalität der mobilen Arbeitsmaschine auch dann gewährleistet ist, wenn die Primärlenkung in Form eines Lenkrads und eines Lenksäulenabschnitts demontiert ist.

Anstatt der montierten Lenksäule kann eine Art Schutzkappe mittels derselben Rast- bzw. Verriegelungsfunktion den stehengebliebenen Lenksäulen-Stummel vor Schmutz, Staub oder eventuellen Verletzungen schützen. Diese Schutzkappe tauscht hierbei immer dem Platz mit der Lenksäule. Ist die Lenksäule vor dem Fahrer montiert, ist die Schutzkappe auf der Ausgleichsposition montiert. Ist die Lenksäule dagegen auf der Ausgleichsposition montiert, ist die Schutzkappe vor dem Fahrer montiert.

## Patentansprüche

1. Mobile Arbeitsmaschine, insbesondere Bagger, umfassend:
eine Fahrerkabine (1) zum Aufnehmen eines Bedieners der mobilen Arbeitsmaschine,
einen in der Fahrerkabine angeordneten Bedienplatz für den Bediener, insbesondere ein Sitz,
eine in Fahrtrichtung der mobilen Arbeitsmaschine vor dem Bedienplatz angeordnete Primärlenkung (6), insbesondere ein Lenkrad, und
eine in Fahrtrichtung der mobilen Arbeitsmaschine seitlich zum Bedienplatz versetzt angeordnete Sekundärlenkung (8), insbesondere ein Joystick,
**dadurch gekennzeichnet, dass**
die Primärlenkung (6) einen Lenksäulenabschnitt (7) aufweist, der mit einer Lenksäulenaufnahme (10) zusammenwirkt, um eine Lenkaktuation an eine die gewünschte Lenkbewegung umsetzende Steuereinheit weiterzugeben, wobei
der Lenksäulenabschnitt (7) und die Lenksäulenaufnahme (10) über eine Steckverbindung miteinander drehfest verbindbar sind, sodass der Bediener dazu in der Lage ist, in Abhängigkeit einer empfundenen Sichteinschränkung, die Primärlenkung (6) zu demontieren.

2. Mobile Arbeitsmaschine nach dem vorhergehenden Anspruch 1, wobei die Steckverbindung mithilfe einer Schnellkupplung umgesetzt ist, die vorzugsweise den an die Lenksäulenaufnahme (10) gekoppelten Lenksäulenabschnitt durch Betätigen eines Verriegelungsmechanismus, beispielsweise ein Fußpedal (12), freigibt, bevorzugterweise derart, dass der Lenksäulenabschnitt dann durch ein Herabheben von der Lenksäulenaufnahme getrennt werden kann.

3. Mobile Arbeitsmaschine nach einem der vorhergehenden Ansprüche, wobei die Fahrerkabine einen Bodenbereich (3) aufweist, von dem sich die Lenksäulenaufnahme (10) nach oben hin erstreckt.

4. Mobile Arbeitsmaschine nach dem vorhergehenden Anspruch 3, wobei die Lenksäulenaufnahme (10) weniger als 30 cm, vorzugsweise weniger als 20 cm und bevorzugter Weise weniger als 10 cm von dem Bodenbereich (3) der Fahrerkabine absteht.

5. Mobile Arbeitsmaschine nach einem der vorhergehenden Ansprüche, wobei die Fahrerkabine eine Frontscheibe (2) aufweist, die vorzugsweise bis zu einem Bodenbereich (3) der Fahrerkabine verläuft.

6. Mobile Arbeitsmaschine nach einem der vorhergehenden Ansprüche, wobei die drehfeste Verbindung von Lenksäulenabschnitt (7) und Lenksäulenaufnahme (10) über eine formschlüssige Verbindung, bspw. eine Kerbverzahnung, umgesetzt ist.

7. Mobile Arbeitsmaschine nach einem der vorhergehenden Ansprüche, wobei eine Detektionsvorrichtung vorgesehen ist, die erfasst, ob der Lenksäulenabschnitt (7) mit der Lenksäulenaufnahme (10) zusammenwirkt, bzw. auf diesen aufgesteckt ist, und ein entsprechendes Signal an eine Maschinensteuerung der mobilen Arbeitsmaschine überträgt.

8. Mobile Arbeitsmaschine nach dem vorhergehenden Anspruch 7, wobei die Maschinensteuerung dazu ausgelegt ist, dann, wenn das durch die Detektion erfasste Signal angibt, dass der Lenksäulenabschnitt (7) und die Lenksäulenaufnahme (10) voneinander getrennt sind, eine maximale Fahrgeschwindigkeit der mobilen Arbeitsmaschine zu verringern.

9. Mobile Arbeitsmaschine nach dem vorhergehenden Anspruch 8, wobei die Maschinensteuerung dazu ausgelegt ist, die maximale Geschwindigkeit der mobilen Arbeitsmaschine auf einen Wert von nicht mehr als 20 km/h, vorzugsweise nicht mehr als 15 km/h und bevorzugter Weise nicht mehr als 12 km/h zu reduzieren.

10. Mobile Arbeitsmaschine nach einem der vorhergehenden Ansprüche 7-9, wobei die Maschinensteuerung dazu ausgelegt ist, dann, wenn das durch die Detektion erfasste Signal angibt, dass der Lenksäulenabschnitt (7) und die Lenksäulenaufnahme (10) in Wirkverbindung zueinanderstehen, eine Beschränkung der maximalen Fahrgeschwindigkeit der mobilen Arbeitsmaschine nicht vorzusehen oder aufzuheben.

11. Mobile Arbeitsmaschine nach einem der vorhergehenden Ansprüche, wobei die Lenksäulenaufnahme (10) im Kontaktbereich mit dem Lenksäulenabschnitt (7) die Ausgestaltung einer Welle mit Formschlusselementen, bspw. radial umlaufender Kerbverzahnung, aufweist.

12. Mobile Arbeitsmaschine nach einem der vorhergehenden Ansprüche, wobei der Lenksäulenabschnitt (7) in Kontaktbereich mit der Lenksäulenaufnahme (10) die Ausgestaltung einer Hohlwelle aufweist, die an ihrem Innenumfang mit einer Kerbverzahnung versehen ist, wobei diese Kerbverzahnung vorzugsweise auf eine Kerbverzahnung des Lenksäulenabschnitt abgestimmt ist.

13. Mobile Arbeitsmaschine nach einem der vorhergehenden Ansprüche, wobei eine Verriegelungseinheit vorgesehen ist, die nach einem Aufstecken des Lenksäulenabschnitts (7) auf die Lenksäulenaufnahme (10) alle relativen Bewegungen des Lenksäulenabschnitts gegenüber der Lenksäulenaufnahme unterbindet.

14. Mobile Arbeitsmaschine nach dem vorhergehenden Ansprüche 12 oder 13, wobei die Verriegelungseinheit seitlich zur Längsausdehnung der Lenksäulenaufnahme (10) und/oder des Lenksäulenabschnitts (7) abstehende Stifte zum Einhaken einer Rastnase aufweist.

15. Mobile Arbeitsmaschine nach einem der vorhergehenden Ansprüche 12-14, wobei die Verriegelungseinheit an der Lenksäulenaufnahme (10) und/oder an dem Lenksäulenabschnitt (7) eine federvorgespannte Rastnase aufweist, um bei einem Aufstecken des Lenksäulenabschnitts auf die Lenksäulenaufnahme eine Verrastung von Lenksäulenabschnitt mit Lenksäulenaufnahme zu bewirken.

## Claims

1. Mobile working machine, in particular a digger, comprising:
a driver's cab (1) for accommodating an operator of the mobile working machine,
a control station for the operator, in particular a seat, arranged in the driver's cab,
a primary steering system (6), in particular a steering wheel, arranged in front of the control station in the direction of travel of the mobile working machine, and
a secondary steering system (8), in particular a joystick, arranged laterally offset from the control station in the direction of travel of the mobile working machine,
**characterized in that**
the primary steering system (6) has a steering column section (7), which cooperates with a steering column mount (10) to transmit a steering actuation to a control unit implementing the desired steering movement, wherein the steering column section (7) and the steering column mount (10) can be connected to each other in a rotationally fixed manner via a plug-in connection, such that the operator is able to dismount the primary steering system (6) depending on a perceived visual restriction.

2. Mobile working machine according to the preceding claim 1, wherein the plug-in connection is implemented with the aid of a quick coupling, which preferably releases the steering column section coupled to the steering column mount (10) by actuating a locking mechanism, for example a foot pedal (12), preferably such that the steering column section can then be separated from the steering column mount by lifting it down.

3. Mobile working machine according to any one of the preceding claims, wherein the driver's cab has a floor area (3), from which the steering column mount (10) extends upwards.

4. Mobile working machine according to the preceding claim 3, wherein the steering column mount (10) protrudes less than 30 cm, preferably less than 20 cm, and in a preferred manner less than 10 cm from the floor area (3) of the driver's cab.

5. Mobile working machine according to any one of the preceding claims, wherein the driver's cab has a windscreen (2), which preferably extends to a floor area (3) of the driver's cab.

6. Mobile working machine according to any one of the preceding claims, wherein the rotationally fixed connection of the steering column section (7) and the steering column mount (10) is implemented via a form-fitting connection, e.g. a serrated toothing.

7. Mobile working machine according to any one of the preceding claims, wherein a detection device is provided, which detects whether the steering column section (7) cooperates with or is plugged onto the steering column mount (10) and transmits a corresponding signal to a machine control of the mobile working machine.

8. Mobile working machine according to the preceding claim 7, wherein the machine control is designed to reduce a maximum travel speed of the mobile working machine when the signal detected by the detection indicates that the steering column section (7) and the steering column mount (10) are separated from each other.

9. Mobile working machine according to the preceding claim 8, wherein the machine control is designed to reduce the maximum travel speed of the mobile working machine to a value of at most 20 km/h, preferably at most 15 km/h, and in a preferred manner at most 12 km/h.

10. Mobile working machine according to any one of the preceding claims 7-9, wherein the machine control is designed not to provide or to remove a restriction on the maximum travel speed of the mobile working machine when the signal detected by the detection indicates that the steering column section (7) and the steering column mount (10) are operatively connected.

11. Mobile working machine according to any one of the preceding claims, wherein the steering column mount (10) has, in the contact area with the steering column section (7), the configuration of a shaft with form-fitting elements, for example radially circumferential serrated toothing.

12. Mobile working machine according to any one of the preceding claims, wherein the steering column section (7) has, in the contact area with the steering column mount (10), the configuration of a hollow shaft, which is provided with a serrated toothing on its inner circumference, wherein this serrated toothing is preferably matched to a serrated toothing of the steering column mount.

13. Mobile working machine according to any one of the preceding claims, wherein a locking unit is provided, which, once the steering column section (7) has been plugged onto the steering column mount (10), prevents all relative movements of the steering column section with respect to the steering column mount.

14. Mobile working machine according to any one of the preceding claims 12 or 13, wherein the locking unit has pins projecting laterally to the longitudinal extent of the steering column mount (10) and/or the steering column section (7) for hooking a latching lug.

15. Mobile working machine according to any one of the preceding claims 12-14, wherein the locking unit has a spring-biased latching lug on the steering column mount (10) and/or on the steering column section (7) in order to effect latching of the steering column section with the steering column mount when the steering column section is plugged onto the steering column mount.

## Revendications

1. Engin de travail mobile, notamment excavateur, comprenant :
une cabine de conduite (1) pour recevoir un opérateur de l'engin de travail mobile,
un poste de commande pour l'opérateur agencé dans la cabine de conduite, notamment un siège,
une direction primaire (6) agencée devant le poste de commande dans le sens de la marche de l'engin de travail mobile, notamment un volant, et
une direction secondaire (8) agencée décalée latéralement par rapport au poste de commande dans le sens de la marche de l'engin de travail mobile, notamment un joystick,
**caractérisé en ce que**
la direction primaire (6) présente une section de colonne de direction (7) qui coopère avec un logement de colonne de direction (10) pour transmettre une action de direction à une unité de commande réalisant le mouvement de direction souhaité, la section de colonne de direction (7) et le logement de colonne de direction (10) pouvant être reliés l'un à l'autre de manière solidaire en rotation par l'intermédiaire d'une liaison enfichable, de telle sorte que l'opérateur est en mesure de démonter la direction primaire (6) en fonction d'une restriction de visibilité ressentie.

2. Engin de travail mobile selon la revendication 1, dans lequel la liaison enfichable est réalisée au moyen d'un raccord rapide qui libère de préférence la section de colonne de direction couplée au logement de colonne de direction (10) en actionnant un mécanisme de verrouillage, par exemple une pédale (12), de préférence de telle sorte que la section de colonne de direction peut ensuite être séparée du logement de colonne de direction en la soulevant.

3. Engin de travail mobile selon l'une quelconque des revendications précédentes, dans lequel la cabine de conduite présente une zone de plancher (3) à partir de laquelle le logement de colonne de direction (10) s'étend vers le haut.

4. Engin de travail mobile selon la revendication 3, dans lequel le logement de colonne de direction (10) fait saillie de moins de 30 cm, de préférence de moins de 20 cm, et plus préférentiellement de moins de 10 cm, par rapport à la zone de plancher (3) de la cabine de conduite.

5. Engin de travail mobile selon l'une quelconque des revendications précédentes, dans lequel la cabine de conduite présente un pare-brise (2) qui s'étend de préférence jusqu'à une zone de plancher (3) de la cabine de conduite.

6. Engin de travail mobile selon l'une quelconque des revendications précédentes, dans lequel la liaison solidaire en rotation de la section de colonne de direction (7) et du logement de colonne de direction (10) est réalisée par l'intermédiaire d'une liaison par complémentarité de forme, par exemple une denture cannelée.

7. Engin de travail mobile selon l'une quelconque des revendications précédentes, dans lequel il est prévu un dispositif de détection qui détecte si la section de colonne de direction (7) coopère avec le logement de colonne de direction (10) ou si elle est enfichée sur celui-ci, et qui transmet un signal correspondant à une commande d'engin de l'engin de travail mobile.

8. Engin de travail mobile selon la revendication 7, dans lequel la commande d'engin est conçue pour réduire une vitesse de marche maximale de l'engin de travail mobile lorsque le signal détecté indique que la section de colonne de direction (7) et le logement de colonne de direction (10) sont séparés l'un de l'autre.

9. Engin de travail mobile selon la revendication 8, dans lequel la commande d'engin est conçue pour réduire la vitesse maximale de l'engin de travail mobile à une valeur non supérieure à 20 km/h, de préférence non supérieure à 15 km/h, et plus préférentiellement non supérieure à 12 km/h.

10. Engin de travail mobile selon l'une quelconque des revendications précédentes 7 à 9, dans lequel la commande d'engin est conçue pour ne pas prévoir ou supprimer une limitation de la vitesse de marche maximale de l'engin de travail mobile lorsque le signal détecté indique que la section de colonne de direction (7) et le logement de colonne de direction (10) sont en liaison fonctionnelle.

11. Engin de travail mobile selon l'une quelconque des revendications précédentes, dans lequel le logement de colonne de direction (10) présente, dans la zone de contact avec la section de colonne de direction (7), la configuration d'un arbre avec des éléments de liaison par complémentarité de forme, par exemple une denture cannelée périphérique radiale.

12. Engin de travail mobile selon l'une quelconque des revendications précédentes, dans lequel la section de colonne de direction (7) présente, dans la zone de contact avec le logement de colonne de direction (10), la configuration d'un arbre creux qui est pourvu d'une denture cannelée sur sa périphérie intérieure, cette denture cannelée étant de préférence adaptée à une denture cannelée de la section de colonne de direction.

13. Engin de travail mobile selon l'une quelconque des revendications précédentes, dans lequel il est prévu une unité de verrouillage qui, après un enfichage de la section de colonne de direction (7) sur le logement de colonne de direction (10), empêche tous les mouvements relatifs de la section de colonne de direction par rapport au logement de colonne de direction.

14. Engin de travail mobile selon la revendication 12 ou 13 précédente, dans lequel l'unité de verrouillage présente des broches faisant saillie latéralement par rapport à l'extension longitudinale du logement de colonne de direction (10) et/ou de la section de colonne de direction (7) pour accrocher un ergot d'encliquetage.

15. Engin de travail mobile selon l'une quelconque des revendications 12 à 14 précédentes, dans lequel l'unité de verrouillage présente sur le logement de colonne de direction (10) et/ou sur la section de colonne de direction (7) un ergot d'encliquetage précontraint par ressort, afin de provoquer un encliquetage de la section de colonne de direction avec le logement de colonne de direction lors d'un enfichage de la section de colonne de direction sur le logement de colonne de direction.
